# EUROPÄISCHE PATENTSCHRIFT

(11) **EP 2 742 077 B1**
(45) Veröffentlichungstag und Bekanntmachung des Hinweises auf die Patenterteilung: **23.03.2016**
(21) Anmeldenummer: 12740169.3
(22) Anmeldetag: 27.07.2012
(51) Int. Cl.: C08G 2/18, C08G 2/38, C08G 2/00, C08L 59/00

(54) **VERFAHREN ZUR AUFARBEITUNG VON PARTIKELFÖRMIGEM ROHPOLYOXYMETHYLEN**
METHOD FOR PROCESSING PARTICULATE RAW POLYOXYMETHYLENE
PROCÉDÉ DE TRAITEMENT DE POLYOXYMÉTHYLÈNE BRUT PARTICULAIRE

(30) Priorität: 11.08.2011 EP 11177294; 11.08.2011 US 201161522270 P
(43) Veröffentlichungstag der Anmeldung: 18.06.2014
(73) Patentinhaber: BASF SE, 67056 Ludwigshafen (DE)
(72) Erfinder: DEININGER, Jürgen, 68723 Oftersheim (DE); DEMETER, Jürgen, 67227 Frankenthal (DE); HÄFFNER, Rüdiger, 67434 Neustadt (DE); SCHULZ, Ralf, 67346 Speyer (DE); STAMMER, Achim, 67251 Freinsheim (DE)
(86) Internationale Anmeldenummer: PCT/EP2012/064767
(87) Internationale Veröffentlichungsnummer: WO 2013/020830

(56) Entgegenhaltungen:
- EP-A1- 1 688 461
- WO-A1-2006/105970
- US-A- 5 587 449

## Beschreibung

Die Erfindung geht aus von einem Verfahren zur Aufarbeitung von partikelförmigem Rohpolyoxymethylen, das folgende Schritte umfasst:
(a) Zugabe des partikelförmigen Rohpolyoxymehtylens in eine Extraktionskolonne, wobei die Extraktionskolonne mit einem Druck im Bereich von 1 bis 6 bar betrieben wird,
(b) Zugabe eines polaren Extraktionsmittels in die Extraktionskolonne mit einer Temperatur im Bereich von 95 bis 140 °C und einem Druck im Bereich von 1 bis 6 bar.

Die Herstellung von Polyoxymethylen kann in Masse oder in Lösung, drucklos oder unter Druck durchgeführt werden. So ist es zum Beispiel möglich, die Reaktion in homogener Phase in einem Polymerisationsreaktor durchzuführen. Hierbei werden cyclische Formaldehydoligomere mit cyclischen Acetalen in Gegenwart eines Initiators copolymerisiert. Der Initiator wird anschließend durch Zugabe basischer Substanzen deaktiviert und das so entstandene Produkt am Reaktorausgang wird granuliert. Zur Entfernung von Restmonomeren und anderen Verunreinigungen wird das so erzeugte Granulat mit einem Lösungsmittel extrahiert und anschließend getrocknet.

Das Verfahren zur Herstellung von Polyoxymethylen ist beispielsweise in EP-A 0 699 695 beschrieben. Bei dem hier beschriebenen Verfahren wird die Extraktion mit Wasser oder einem Alkohol mit bis zu drei Kohlenstoffatomen durchgeführt. Zusätzlich können basische Substanzen zugesetzt werden, da die Extraktion im basischen Bereich durchgeführt werden soll. Die Temperatur der Extraktion liegt im Bereich von 30 bis 130°C.

Ein weiteres Verfahren zur Herstellung von Polyoxymethylen und dessen anschließende Aufarbeitung ist in WO-A 2006/105970 beschrieben. Bei dem hier offenbarten Verfahren wird mindestens ein -CH₂-O- Einheiten bildendes Monomere gegebenenfalls mit einem Copolymer und einem Initiator in homogener Phase in einer Polymerisationszone polymerisiert, instabile Kettenenden werden abgebaut und Endgruppen verschlossen bei Temperaturen oberhalb der Schmelztemperatur des hergestellten Polymerisats und der Initiator wird durch Zugabe eines Deaktivators deaktiviert. In einem weiteren Schritt wird das Polymerisat zur Entfernung von Restmonomeren entspannt und nach dem Granulieren wird das Granulat zur Entfernung verbliebener Restmonomere extrahiert. Abschließend erfolgt eine Trocknung des Granulats. Als Extraktionsmittel wird zum Beispiel Wasser mit einer Temperatur in Bereich von 100 bis 170°C eingesetzt.

Ein entsprechendes Verfahren ist weiterhin in EP-A 1 418 190 beschrieben.

Nachteil der aus dem Stand der Technik bekannten Verfahren zur Aufarbeitung des Rohpolyoxymethylens ist, dass das Granulat nach der Extraktion eine Gelbfärbung aufweist und zudem bei der Extraktion Formaldehyd abgespalten wird. Der Formaldehyd bildet im zur Extraktion eingesetzten Wasser Ameisensäure, wodurch der pH-Wert des eingesetzten Extraktionsmittels sinkt. Der geringere pH-Wert katalysiert jedoch den Polymerabbau, wodurch weiteres Formaldehyd freigesetzt wird.

Dieses Problem tritt insbesondere bei der Durchführung der Extraktion bei Temperaturen oberhalb von 95°C auf. Eine geringere Extraktionstemperatur hat jedoch zur Folge, dass die Wirkung der Extraktion insbesondere für den Einsatz des Polyoxymethylen im Lebensmittel- oder Warmwasserbereich nicht ausreichend ist und zu viele Restmonomere im Polymer verbleiben.

Ein Verfahren zur Herstellung von Polyaccetal-Verbindungen wird auch in EP 1 688 461 A1 beschrieben. Bei dem beschriebenen Verfahren wird eine Aufreinigung, unter anderem eine Extraktion mit einem Extraktionsmittel und einem zugefügten basischen Medium, durchgeführt, um Trioxane zu entfernen.

Dem Dokument Bates et al.: "AMINE BUFFERS FOR pH CONTROL", [Annals of the New York Academy of Sciences, Wiley Blackwell Publishing, INC, US] Bd. 92, Nr. Part 1 1. Juni 1961 (1961-06-01), Seiten 341 - 356, XP008161186, ISSN: 0077 - 8923, DOI: 10.1111/J.1749-6632.1961.TB44985.X können Amin-Substanzen entnommen werden, welche als Puffersubstanzen in einem pH-Bereich von 7 bis 12 puffern.

Aufgabe der vorliegenden Erfindung ist es daher, ein Verfahren zur Aufarbeitung von partikelförmigem Rohpolyoxymethylen bereitzustellen, bei dem zum Einen die Formaldehydbildung unterdrückt wird und bei dem zudem die Gelbfärbung reduziert wird.

Gelöst wird die Aufgabe durch ein Verfahren zur Aufarbeitung von partikelförmigem Rohpolyoxymethylen, das folgende Schritte umfasst:
(a) Zugabe des partikelförmigen Rohpolyoxymethylens in eine Extraktionskolonne, wobei die Extraktionskolonne mit einem Druck im Bereich von 1 bis 6 bar betrieben wird,
(b) Zugabe eines polaren Extraktionsmittels in die Extraktionskolonne mit einer Temperatur im Bereich von 95 bis 140 °C und einem Druck im Bereich von 1 bis 6 bar,
wobei in die Extraktionskolonne 10 bis 1000 ppm, bezogen auf die zugeführte Menge an polarem Extraktionsmittel, einer Puffersubstanz, die im pH-Bereich von 7,5 bis,11,5 puffert, zugegeben wirdund dass die Puffersubstanz ausgewählt ist aus Natriumtetraborat, Natriumglycerophosphat oder Mischungen daraus.

Durch die Zugabe der Puffersubstanz kann das basische Niveau in der Extraktion gehalten werden, so dass die Bildung von Formaldehyd durch Dekomposition des Polyoxymethylen verhindert werden kann. Zusätzlich hat sich gezeigt, dass die Zugabe der Puffersubstanz zu einem geringer oder überhaupt nicht gelb verfärbten Produkt führt.

Das partikelförmige Rohpolyoxymethylen entstammt einer an sich bekannten Polymerisation zur Herstellung von Polyoxymethylen, bei der mindestens ein -CH₂-O-Einheit bildendes Monomer gegebenenfalls mit einem oder mehreren Comonomeren und mindestens einem Initiator und gegebenenfalls einem Kettenregler in homogener Phase polymerisiert wird.

Geeignete Monomere, die zur Polymerisation eingesetzt werden, sind zum Beispiel Trioxan oder Formaldehyd. Als Initiatoren eignen sich zum Beispiel Bortrifluorid oder Perchlorsäure

Ganz allgemein weisen diese Polymere mindestens 50 mol-% an wiederkehrenden Einheiten -CH₂O- in der Polymerhauptkette auf. Bei Polyoxymethylenhomopolymeren handelt es sich im Allgemeinen um unverzweigte lineare Polymere, die in der Regel mindestens 80 %, vorzugsweise mindestens 90 %, Oxymethylen-Einheiten enthalten. Die Homopolymeren werden im Allgemeinen durch Polymerisation von Formaldehyd oder seiner zyklischen Oligomeren, wie Trioxan oder Tetroxan, hergestellt, vorzugsweise in der Gegenwart von geeigneten Katalysatoren.

Homopolymere des Formaldehyds oder Trioxans sind solche Polymere, deren Hydroxylendgruppen in bekannter Weise chemisch gegen Abbau stabilisiert sind, zum Beispiel durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen.

Polyoxymethylencopolymere können neben den wiederkehrenden Einheiten -CH₂O- noch bis zu 50, vorzugsweise 0,1 bis 20, insbesondere 0,3 bis 10 mol-%, und ganz besonders bevorzugt 0,02 bis 2,5 mol% an wiederkehrenden Einheiten 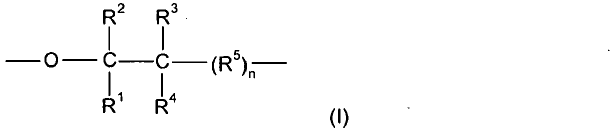 aufweisen, wobei
R¹ bis R⁴ unabhängig voneinander ein Wasserstoffatom, eine C₁-C₄-Alkylgruppe oder eine halogensubstituierte Alkylgruppe mit 1 bis 4 C-Atomen und
R⁵ eine -CH₂-, CH₂O-, eine C₁-C₄-alkyl- oder C₁-C₄-haloalkylsubstituierte Methylengruppe oder eine entsprechende Oxymethylengruppe darstellen und
n einen Wert im Bereich von 0 bis 3 hat.

Vorteilhafterweise können diese Gruppen durch Ringöffnung von cyclischen Ethern in die Copolymere eingeführt werden. Bevorzugte cyclische Ether sind solche der Formel 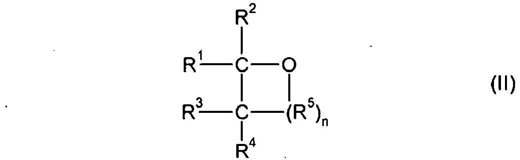 wobei
R¹ bis R⁵ und n die oben genannte Bedeutung haben.

Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale, wie Polydioxolan oder Polydioxepan, als Comonomere genannt.

Weiterhin können die Polymere einen Vernetzer enthalten. Als solcher wird beispielsweise eine bifunktionelle Verbindung eingesetzt, die zwei höhere cyclische Ether der allgemeinen Formel (II) enthält, die über die Einheit Z miteinander verbunden sind.

Vorzugsweise enthält das für das erfindungsgemäße Verfahren eingesetzte Polyoxymethylenpolymerisat als Vernetzer eine bifunktionelle Verbindung der Formel 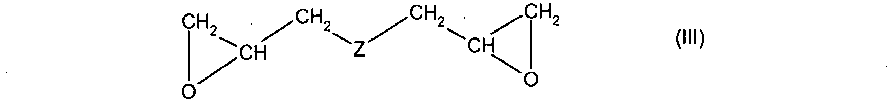 und/oder 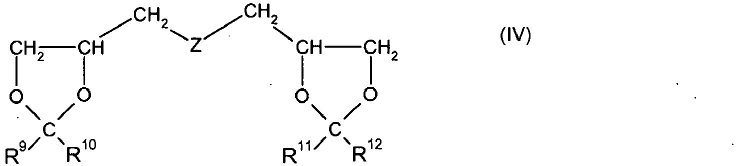 wobei
Z eine chemische Bindung, -O-, -OR⁶O-, -R⁷-, -R⁷OR⁸-, -(O-CH₂-CH₂)ₙ-O- oder -(O-CH₂)ₙ-O- ist. Darin bedeuten
R⁶ C₁-C₈-Alkylen oder C₃-C₈-Cycloalkylen,
R⁷ und R⁸ jeweils unabhängig voneinander eine C₁-C₁₂-Alkylengruppe und
n eine Zahl zwischen 1 und 4.

Bevorzugt ist Z eine chemische Bindung, -O- oder -OR⁶O-, wobei
R⁶ die vorstehend genannte Bedeutung hat.

Die Verknüpfung Z wird vorzugsweise so ausgewählt, dass sie gegen die für die Polymerisation von Formaldehyd und seiner cyclischen Oligomeren, wie Trioxan und Tetroxan bekannten kationisch wirksamen Katalysatoren und Initiatoren stabil ist, das heißt, dass die Verknüpfung Z nicht signifikant zu Abbruch-, Übertragungs- und sonstigen Reaktionen führen darf.

Die Reste R⁹ bis R¹² in der bifunktionellen Verbindung der Formel (IV) sind jeweils unabhängig voneinander Wasserstoff oder eine C₁-C₄-Alkylgruppe. Bevorzugt sind die Reste R⁹ bis R¹² Wasserstoff, ganz besonders bevorzugt wird als Vernetzer eine bifunktionelle Verbindung der Formel (IV) eingesetzt, bei der Z Sauerstoff und die Reste R⁹ bis R¹² Wasserstoff sind.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen, wie beispielsweise Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Besonders bevorzugt als Vernetzer wird Diglycerindiformal eingesetzt. Dieses lässt sich relativ einfach und mit guter Ausbeute aus linearem Diglycerin und Formaldehyd (als wässrige Lösung Paraformaldehyd oder Trioxan) in Gegenwart eines sauren Katalysators herstellen. Als Hauptprodukt erhält man 4,4'-bis-(1,3-Dioxolanylmethyl)oxid. Dieses ist entsprechend der allgemeinen Struktur (IV) aufgebaut, wobei

| | |
|---|---|
| Z | Sauerstoff und |
| die Reste R⁹ bis R¹² | Wasserstoff sind. |

Bei Verwendung von Diglycerin, das vorwiegend aus der linearen Verbindung besteht, daneben aber noch verzweigte Isomere enthält, führt die Umsetzung mit Formaldehyd zu einem Gemisch von Isomeren, wie Glycerindiformalen, deren Hauptbestandteil die oben genannte Verbindung, darstellt. Dieses Gemisch eignet sich ebenso wie die reine Substanz. Das Diglycerindiformal wird üblicherweise in Mengen von 0,01 bis 1 Gew.-%, bevorzugt im Bereich von 0,05 bis 0,3 Gew.-% und insbesondere im Bereich von 0,1 bis 0,2 Gew.-%, bezogen auf das Gewicht des eingesetzten Trioxans, verwendet.

Nach Abschluss der Polymerisation werden instabile Kettenenden abgebaut und Endgruppen verschlossen.

Gleichzeitig wird der Initiator durch Zugabe von Deaktivatoren in einer sich an die Polymerisationszone anschließende Deaktivierungszone deaktiviert. Die Deaktivierung des Initiators erfolgt vorzugsweise bei Temperaturen unterhalb der Schmelztemperatur des Polymeren. Als Deaktivatoren eignen sich zum Beispiel Natriummethylat, Natriumtetraborat, Glycerophosphat die in einer Menge von 5 bis 10 000 ppm bezogen auf die Masse an hergestelltem Polyoxymethylen eingesetzt werden.

Das die Deaktivierungszone verlassende Polymerisat wird mittels eines Wärmeübertragers auf eine mindestens 30 °C oberhalb der Schmelztemperatur des vorliegenden Polymerisat/Monomer-Gemisches liegende Temperatur aufgeheizt, typischerweise auf eine Temperatur von 190 °C. Anschließend wird die so erzeugte Polymerisatschmelze in eine Entspannungszone überführt, die bei einem Druck oberhalb des Umgebungsdrucks, bevorzugt bei einem Druck im Bereich von 1,1 bis 6 bar betrieben wird.

In einem nächsten Schritt werden mindestens 95 % der Restmonomeren und das in der Polymerisationszone entstandene Formaldehyd bei einem Druck oberhalb des Umgebungsdrucks, beispielsweise bei 3 bar, in einer Entgasungszone entfernt. Die so aufbereitete Poymerisatschmelze wird in einen Extruder überführt, in dem zunächst Additive zugegeben werden können, um die Eigenschaften des Polyoxymethylens einzustellen und in dem daran anschließend eine Restentgasung zur weiteren Enfernung von Monomeren erfolgt. Das den Extruder verlassende Polymer wird zum partikelförmigen Rohpolyoxymethylen granuliert und erfindungsgemäß weiter aufgearbeitet.

Neben der vorstehend beschriebenen Polymerisation in homogener Phase kann das partikelförmige Rohpolyoxymethylen auch jeder beliebigen anderen Herstellung von Polyoxymethylen entstammen.

Zur Entfernung von noch im Polymerisat enthaltenen Restmonomeren wird das partikelförmige Rohpolyoxymethylen erfindungsgemäß extrahiert. Hierzu wird das partikelförmige Rohpolyoxymethyen einer Extraktionskolonne zugegeben, in die weiterhin ein polares Extraktionsmittel zugegeben wird. Mit Hilfe des polaren Extraktionsmittels werden noch im partikelförmigen Rohpolyoxymethylen enthaltene Restmonomere und Verunreinigungen entfernt. Diese lösen sich im polaren Extraktionsmittel und werden so vom Rohpolyoxmethylen gelöst.

Als polares Extraktionsmittel wird vorzugsweise Wasser eingesetzt. Ebenso können kurzkettige Alkohole oder deren Mischungen mit Wasser eingesetzt werden. Die Extraktion wird bei einer Temperatur oberhalb von 95°C, bevorzugt oberhalb von 100°C und insbesondere im Bereich von 120 bis 130 °C durchgeführt. Die Durchführung der Extraktion bei einer Temperatur oberhalb von 95°C führt zu einem Produkt, das eine ausreichende Reinheit aufweist, die auch den Einsatz im Lebensmittelbereich erlaubt.

Der Druck, bei dem die Extraktion durchgeführt wird, wird so gewählt, dass das Extraktionsmittel bei der gewählten Temperatur nicht verdampft. Bei der Verwendung von Wasser und einer Temperatur unter 100°C kann die Extraktion noch bei Umgebungsdruck durchgeführt werden. Bevorzugt ist es jedoch, die Extraktion bei einem Druck oberhalb dem Umgebungsdruck, bevorzugt bei einem Druck im Bereich von 1 bis 6 bar durchzuführen. Besonders bevorzugt wird die Extraktion bei einem Druck im Bereich von 2 bis 3 bar durchgeführt.

Die Extraktion kann im Gleichstrom oder im Gegenstrom durchgeführt werden. Bevorzugt ist es, die Extraktion im Gegenstrom durchzuführen. Bei einer Durchführung der Extraktion im Gegenstrom ist es bevorzugt, das partikelförmige Rohpolyoxymethylen am Kopf der Extraktionskolonne zuzugeben und das polare Extraktionsmittel über einen Verteiler im unteren Bereich der Kolonne. Das nach der Extraktion beladene Extraktionsmittel wird am Kopf der Kolonne abgezogen und aus dem Prozess entnommen. Das beladene Extraktionsmittel kann entsorgt werden oder es wird gereinigt und erneut dem Prozess zugeführt. Die Reinigung kann zum Beispiel durch destillative Aufbereitung durchgeführt werden.

Die Extraktion wird erfindungsgemäß in einer Extraktionskolonne durchgeführt. Hierbei kann die Kolonne übliche Einbauten aufweisen. Auch ist es möglich, die Extraktionskolonne zum Beispiel als Mixer/Settler-Apparat zu gestalten.

Erfindungsgemäß wird in die Extraktionskolonne 10 bis 1000 ppm, bevorzugt 50 bis 300 ppm und insbesondere 80 bis 200 ppm, bezogen auf die zugeführte Menge an polarem Extraktionsmittel, einer Puffersubstanz, die im pH-Bereich von 7,5 bis 11,5, bevorzugt im pH-Bereich von 8 bis 10 und insbesondere im pH-Bereich von 8 bis 9 puffert, zugegeben. Durch die Zugabe der Puffersubstanz wird vermieden, dass das polare Extraktionsmittel sauer wird, das heißt, dass der pH-Wert unter 7 sinkt. Ein entsprechend niedriger pH-Wert führt dazu, dass der Polymerabbau in der Extraktionskolonne katalysiert wird, wodurch Formaldehyd entsteht. Dieses wandelt sich weiter um in Ameisensäure, wodurch der pH-Wert im polaren Extraktionsmittel weiter sinkt. Durch die Zugabe der Puffersubstanz wird das Absinken des pH-Wertes im polaren Extraktionsmittel unterbunden und hierdurch der Polymerabbau, durch den Formaldehyd entsteht, das sich weiter in Ameisensäure umwandelt, reduziert.

Der Polymerabbau ergibt sich insbesondere bei Temperaturen der Extraktion von mehr als 95 °C. Ein Absenken der Temperatur ist jedoch nicht möglich, da eine Extraktion bei niedrigeren Temperaturen nicht ausreichend wirkt, um insbesondere Polyoxymethylen herzustellen, das auch in Lebensmittel-Anwendungen oder Warmwasser-Anwendungen eingesetzt werden kann. Weiterhin hat sich gezeigt, dass durch die Zugabe der Puffersubstanz die Gelbfärbung des Polyoxymethylens reduziert wird bzw. vollständig unterbunden werden kann.

Die Puffersubstanz kann in einer ersten Ausführungsform dem polaren Extraktionsmittel vor Zugabe in die Extraktionskolonne zugemischt werden. Alternativ ist es auch möglich, die Puffersubstanz und das polare Extraktionsmittel gleichzeitig in die Extraktionskolonne zuzugeben, wobei die Zugabe hierbei über getrennte Zuläufe erfolgen kann. Wenn das polare Extraktionsmittel und die Puffersubstanz über getrennte Zuläufe der Extraktionskolonne zugeführt werden, ist es weiterhin vorteilhaft, wenn die Menge der zugegebenen Puffersubstanz jeweils auf die aktuelle Menge des zugegebenen polaren Extraktionsmittels abgestimmt wird.

Bei Zumischung der Puffersubstanz in das polare Extraktionsmittel vor Zugabe in die Extraktionskolonne ist es möglich, dass die Puffersubstanz über eine Dosierleitung in die Zuführleitung für das polare Extraktionsmittel eindosiert wird. In diesem Fall mündet die Dosierleitung für die Puffersubstanz in der Zufuhrleitung für das polare Extraktionsmittel, wobei die Dosierleitung an jeder beliebigen Stelle in die Zufuhrleitung für das Extraktionsmittel münden kann. Vorteilhaft ist es, wenn die Dosierleitung für die Puffersubstanz mit einem Abstand in die Zufuhrleitung für das polare Extraktionsmittel mündet, der so bemessen ist, dass sich die Puffersubstanz mit dem Extraktionsmittel in der Zufuhrleitung für das polare Extraktionsmittel nach Mündung der Dosierleitung vollständig vermischt. Es ist jedoch auch möglich, die Dosierleitung in einem geringeren Abstand in der Zufuhrleitung des polaren Extraktionsmittels vorzusehen, so dass noch nicht vollständig vermischte Puffersubstanz und polares Extraktionsmittel in die Extraktionskolonne zugegeben werden und die vollständige Durchmischung erst in der Extraktionskolonne erfolgt.

In einer alternativen Ausführungsform ist es auch möglich, das polare Extraktionsmittel und die Puffersubstanz bereits in einem Vorlagebehälter zu mischen. In diesem Fall werden in den Vorlagebehälter polares Extraktionsmittel und Puffersubstanz in der jeweils gewünschten Menge zugegeben. Um das Extraktionsmittel und die Puffersubstanz zu mischen, ist es weiterhin vorteilhaft, wenn der Vorlagebehälter eine Mischvorrichtung, beispielsweise einen Rührer aufweist. Mit diesem können die Puffersubstanz und das Extraktionsmittel durchmischt werden, damit immer eine Mischung mit einer Zusammensetzung aus dem Vorlagebehälter entnommen wird, die ausreichende Puffersubstanz enthält.

Eine für das erfindungsgemäße Verfahren geeignete Puffersubstanz enthält vorzugsweise Natriumtetraboratlösung und Glycerophosphatlösung.

Bevorzugt ist eine Puffersubstanz, die Natriumtetraborat und Glycerophosphat enthält. Hierbei wird zur Herstellung der Puffersubstanz vorzugsweise Wasser, eine 2,5%ige Natriumtetraboratlösung und eine 50%ige Glycerophosphatlösung eingesetzt. Eine geeignete Puffersubstanz enthält dabei zum Beispiel 150 bis 250 I, vorzugsweise 160 bis 190 I, beispielsweise 175 I Wasser, 1 bis 5 I, vorzugsweise 2 bis 4 I, beispielsweise 2,5 I Natriumtetraboratlösung und 100 bis 500 ml, vorzugsweise 200 bis 350 ml, beispielsweise 300 ml Glycerophosphatlösung.

Nach Durchführung der Extraktion wird das partikelförmige Polyoxymethylen aus der Extraktionskolonne entnommen. Hierzu ist es zum Beispiel möglich, dass das partikelförmige Polyoxymethylen über eine Schleuse aus der Extraktionskolonne entnommen wird. Hierzu sammelt sich zunächst das partikelförmige Polyoxymethylen am Sumpf der Kolonne und kann dann über den Sumpf der Kolonne durch die Schleuse ausgetragen werden. Dies hat den Vorteil, dass das Extraktionsmittel im Wesentlichen in der Extraktionskolonne bleibt und über einen separaten Ablauf entnommen und zurückgeführt werden kann. Das entnommene Polyoxymethylen enthält nur noch Reste an polarem Extraktionsmittel, die in nachfolgenden Schritten auf einfache Weise entfernt werden können.

Hierzu ist es zum Beispiel möglich, das partikelförmige Polyoxymethylen in einer Granulatzentrifuge vom polaren Extraktionsmittel zu trennen. Neben der Trennung in einer Granulatzentrifuge ist auch jede beliebige andere Trennung von partikelförmigem Polyoxymethylen und polarem Extraktionsmittel denkbar. Weitere geeignete Vorrichtungen, in denen das partikelförmige Polyoxymethylen vom polaren Extraktionsmittel getrennt werden kann, sind zum Beispiel Siebe.

Da sich üblicherweise bei der Abtrennung des polaren Extraktionsmittels vom partikelförmigen Polyoxymethylen noch Reste an polarem Extraktionsmittel am Polyoxymethylen befinden, ist es weiterhin vorteilhaft, in einem nachfolgenden Schritt das partikelförmige Polyoxymethylen zu trocknen. Hierzu ist der Granulatzentrifuge vorzugsweise mindestens ein Trockner nachgeschaltet. Als Trockner eignet sich dabei jeder beliebige, dem Fachmann bekannte Trockner. Geeignete Trockner sind zum Beispiel Wirbelbetttrockner, Schachttrockner und Querstromtrockner.

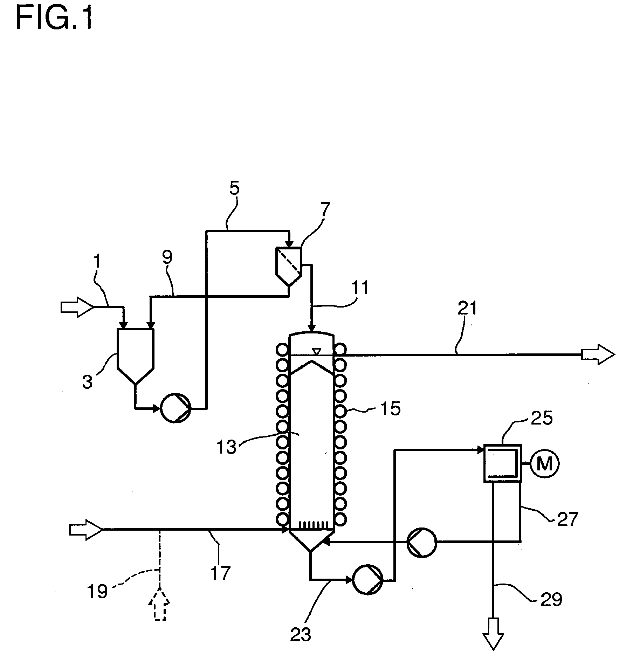

Ein Ausführungsbeispiel der Erfindung ist in der Figur dargestellt und wird in der nachfolgenden Beschreibung näher erläutert.

Die einzige Figur zeigt schematisch ein Verfahrensfließbild des erfindungsgemäßen Verfahrens.

Über eine POM-Zufuhrleitung 1 wird ein Polyoxymethylen-Granulat in einen Vorlagebehälter 3 geleitet. Das Polyoxymethylen-Granulat ist dabei mit einem Fördermittel vermischt. Als Fördermittel eignet sich zum Beispiel Wasser

Aus dem Vorlagebehälter 3 wird das Polyoxymethylen-Granulat mit dem Fördermittel über eine Förderleitung 5 zunächst in einen Abscheider 7 geleitet. Im Abscheider 7 wird das Fördermittel vom Polyoxymethylen-Granulat getrennt. Als Abscheider 7 eignet sich zum Beispiel ein Zyklon-Abscheider.

Das im Abscheider 7 abgetrennte Fördermittel wird über eine Rücklaufleitung 9 zurück in den Vorlagebehälter 3 geleitet. Das vom Fördermittel getrennte Polyoxymethylen-Granulat wird über eine Granulatleitung 11 einer Extraktionskolonne 13 zugeführt.

Zum Transport des Polyoxymethylen-Granulats durch die Granulatleitung 11 ist es möglich, zum Beispiel eine Zellradschleuse vorzusehen, mit der das Polyoxymethylen-Granulat durch die Granulatleitung 11 transportiert wird.

Zur Beheizung der Extraktionskolonne 13 ist in der hier dargestellten Ausführungsform eine Heizschlange 15 vorgesehen, die die Extraktionskolonne 13 umschließt. Alternativ zu der hier dargestellten Heizschlange ist es auch möglich, eine Kolonne mit einem Doppelmantel vorzusehen, mit dem die Extraktionskolonne 13 beheizt wird. Die Beheizung der Extraktionskolonne 13 erfolgt dabei vorzugsweise mit Dampf.

Über eine Extraktionsmittelleitung 17 wird polares Extraktionsmittel am Sumpf der Extraktionskolonne 13 zugeführt. Das polare Extraktionsmittel ist dabei vorzugsweise Wasser. Erfindungsgemäß ist dem durch die Extraktionsmittelleitung 17 zugeführten polaren Extraktionsmittel eine Puffersubstanz beigemischt, wobei der Anteil an Puffersubstanz in dem polaren Extraktionsmittel im Bereich von 10 bis 1000 ppm liegt.

Die Puffersubstanz kann dabei über eine hier gestrichelt dargestellte Dosierleitung 19, die in der Extraktionsmittelleitung 17 mündet, zugeführt werden. Alternativ ist es auch möglich, zum Beispiel in einem hier nicht dargestellten Vorlagebehälter das Extraktionsmittel mit der Puffersubstanz zu mischen und dann über die Extraktionsmittelleitung 17 in die Extraktionskolonne 13 zuzuführen.

Über eine Ablaufleitung 21 am Kopf der Extraktionskolonne 13 wird beladenes polares Extraktionsmittel entnommen. Am Sumpf der Extraktionskolonne 13 wird über eine Produktleitung 23 Polyoxymethylen-Granulat entnommen. Das Polyoxymethylen-Granulat, das durch die Produktleitung 23 am Sumpf der Extraktionskolonne 13 entnommen wird, wird in eine Granulatzentrifuge 25 zur Abtrennung von polarem Extraktionsmittel geleitet. Alternativ zu einer Granulatzentrifuge 25 eignet sich auch jede beliebige andere Vorrichtung, mit der das Polyoxymethylen-Granulat vom polaren Extraktionsmittel getrennt werden kann. Das polare Extraktionsmittel, das in der Granulatzentrifuge 25 vom Polyoxymethylen-Granulat abgetrennt wird, wird über eine Rücklaufleitung 27 in die Extraktionskolonne 13 zurückgeführt. Das vom polaren Extraktionsmittel getrennte Polyoxymethylen-Granulat wird aus der Granulatzentrifuge 25 über eine Produktleitung 29 entnommen. Die Produktleitung 29 kann dann zum Beispiel in einen Trockner führen, in dem das Polyoxymethylen-Granulat weiter getrocknet wird.

### Beispiele

In eine Extraktionskolonne werden zunächst 3100 g Polyoxymethylen-Granulat eingefüllt. Nach dem Einfüllen des Polyoxymethylen-Granulates wird die Extraktionskolonne mit Stickstoff inertisiert und auf die Temperatur aufgeheizt, bei der die Extraktion durchgeführt werden soll. Nach dem Aufheizen wird aus einer Vorlage polares Extraktionsmittel in ca. 15 min. in die Kolonne eingebracht. Hierzu wird das polare Extraktionsmittel vor dem Zulauf in die Extraktionskolonne in einem Wärmetauscher temperiert. Die Zulaufmenge des Extraktionsmittels in die Extraktionskolonne wird mit einer Pumpe geregelt. Die Regelung erfolgt dabei über eine Differenzwägung.

Sobald die Kolonne mit dem Extraktionsmittel gefüllt und aufgeheizt ist, wird der Zulauf auf den gewünschten Volumenstrom eingeregelt. Dieser betrug bei allen Versuchen 103 l/h. Zum Ausgleich von Temperaturverlusten ist die Umwälzleitung mit einem Wärmetauscher temperierbar.

Über eine Druckregelung wird der eingestellte Druck in der Kolonne konstant gehalten. Das Extraktionsmittel verlässt die Kolonne über ein Regelventil der Druckregelung am Kolonnenkopf. Das Extraktionsmittel wird in einem Wärmetauscher abgekühlt und in Abwasser geleitet.

### Vergleichsbeispiel 1

Die Extraktion wird bei einer Temperatur von 130°C und einem Druck von 5 bar durchgeführt. Das Verhältnis von Wasser zu Granulat betrug 10:1. Die Extraktionszeit beträgt 3 Stunden.

Das resultierende Polyoxymethylen-Granulat weist nach Durchführung der Extraktion einen Formaldehydgehalt von 11 ppm, eine Farbzahl DE von 2,48, eine Farbzahl DB von 1,46 und einen Oligomeranteil von 94 ppm auf. Der Anteil an Trioxan und Tetroxan lag unterhalb der Nachweisgrenze. Um ein in der Lebensmittelindustrie verwendbares Polyoxymethylen-Granulat zu erhalten, hätte der Formaldehydanteil kleiner als 8 ppm und der Oligomeranteil kleiner als 70 ppm sein müssen. Der maximale Formaldehydgehalt und der maximale Oligomergehalt werden somit überschritten.

### Vergleichsbeispiel 2

Die Extraktion wurde unter den gleichen Bedingungen wie in Vergleichsbeispiel 1 durchgeführt, jedoch betrug die Extraktionszeit nun 6 Stunden statt 3 Stunden. Nach einer Extraktionszeit von 6 Stunden ergab sich ein Formaldehydgehalt von 4 ppm, eine Farbzahl DE von 4,33, eine Farbzahl von DB von 1,39 und der Anteil an Trioxan, Tetroxan und Oligomeren lag unterhalb der Nachweisgrenze.

Bei Erhöhung der Extraktionszeit wird zwar der gewünschte Formaldehydanteil und der gewünschte Oligomeranteil erreicht, jedoch steigt auch die Farbzahl DE und überschreitet den geforderten Maximalwert von 2,5.

### Vergleichsbeispiel 3

Die Extraktion wird wie in Vergleichsbeispiel 1 beschrieben durchgeführt. Dem Extraktionsmittel wird als Hilfsmittel zusätzlich 0,1 % Triethylamin zugegeben. Die Extraktionszeit betrug 1 Stunde.

Nach einer Extraktionszeit von 1 Stunde unter Zugabe von 0,1 % Triethylamin sind im Granulat noch 10 ppm Formaldehyd enthalten, die Farbzahl DE betrug 3,08, die Farbzahl DB 2,95, der Anteil an Trioxan 693 ppm und der Anteil an Oligomeren 839 ppm. Damit überschreiten sämtliche gemessenen Werte die geforderte Spezifikation.

### Vergleichsbeispiel 4

Der Versuch wurde unter den Bedingungen wie in Vergleichsbeispiel 3 durchgeführt, jedoch wurde anstelle eines Verhältnisses von Wasser zu Granulat von 10:1 ein Verhältnis von Wasser zu Granulat von 6:1 eingestellt.

Nach einer Extraktionszeit von 1 Stunde ergab sich ein Formaldehydgehalt von 10 ppm, eine Farbzahl DE von 3,16, eine Farbzahl DB von 3,00, ein Trioxangehalt von 527 ppm und ein Oligomergehalt von 804 ppm. Aufgrund der geforderten Spezifikationen des Formaldehydgehaltes von weniger als 8 ppm, einer Farbzahl DE von weniger als 2,5, einer Farbzahl DB von weniger als 2,5 und einem Oligomergehalt von maximal 70 ppm und der Forderung, dass kein Trioxan nachgewiesen werden kann, überschreiten sämtliche gemessenen Werte die geforderten Spezifikationen.

### Vergleichsbeispiel 5

Der Versuch wurde wie in Vergleichsbeispiel 4 durchgeführt, jedoch wurde die Extraktionszeit auf 6 Stunden erhöht.

Nach einer Extraktionszeit von 6 Stunden wurde ein Formaldehydgehalt von 6 ppm gemessen, eine Farbzahl DE von 4,81, eine Farbzahl DB von 4,15, ein Trioxangehalt von 783 ppm. Der Anteil an Tetroxan und Oligomeren lag unterhalb der Nachweisgrenze und erfüllte damit die Spezifikation. Die geforderte Spezifikation wurde jedoch nicht von den Farbzahlen DE und DB sowie dem Trioxangehalt erreicht.

### Vergleichsbeispiel 6

Die Versuchsbedingungen entsprechen denen des Vergleichsbeispiels 5, jedoch wurde die Extraktionszeit auf 9 Stunden erhöht.

Nach einer Extraktionszeit von 9 Stunden ergab sich ein Formaldehydgehalt von 6 ppm, die Farbzahl DE betrug 3,16, die Farbzahl DB betrug 3,00, der Trioxangehalt 527 ppm und der Anteil an Tetroxan und Oligomeren lag unterhalb der Nachweisgrenze. Auch bei einer Verlängerung der Extraktionszeit auf 9 Stunden liegen damit die Farbzahl DE, die Farbzahl DB und der Trioxangehalt oberhalb der angeforderten Spezifikationswerte.

### Vergleichsbeispiel 7

Die Extraktion wird unter den gleichen Bedingungen wie im Vergleichsbeispiel 1 durchgeführt. Dem Extraktionsmittel wird zusätzlich als Extraktionshilfsmittel Diethylamin zugegeben, mit dem der pH-Wert auf 9,2 eingestellt wird. Die Extraktionszeit betrug 1 Stunde, das Verhältnis von Wasser zu Granulat 10:1.

Mit Zugabe von Diethylamin ergibt sich bei einer Extraktionszeit von 1 Stunde ein Anteil an Formaldehyd von 7 ppm, eine Farbzahl DE von 3,03, eine Farbzahl DB von 2,59 und ein Oligomergehalt von 72 ppm. Damit liegen die Farbzahlen DE und DB sowie der Oligomergehalt über der geforderten Spezifikation.

### Vergleichsbeispiel 8

Die Extraktion wird wie in Vergleichsbeispiel 1 genannt durchgeführt, jedoch wird dem Extraktionsmittel Triethanolamin zugegeben, wobei die Menge an Triethanolamin so eingestellt wird, dass der pH-Wert auf 9,8 eingestellt wird. Die Extraktionszeit betrug 2 Stunden.

Nach 2 Stunden Extraktion ergab sich ein Formaldehydgehalt von 8 ppm, eine Farbzahl DE von 3,59, eine Farbzahl DB von 2,57 und ein Oligomergehalt von 106 ppm, so dass bei Einsatz eines Extraktionsmittels mit Triethanolamin die Farbzahlen DE und DB sowie der Oligomergehalt oberhalb der geforderten Spezifikationswerte liegen.

### Vergleichsbeispiel 9

Die Extraktion wird wie in Vergleichsbeispiel 1 beschrieben durchgeführt. Dem Extraktionsmittel wird zusätzlich 10 % einer Standardpuffersubstanz für den pH-Wert 8 zugemischt. Die Extraktionszeit betrug 6 Stunden. Mit dem mit Standardpuffersubstanz pH-Wert 8 eingestellten Wasser als polarem Extraktionsmittel ergab sich ein Formaldehydgehalt von 8 ppm, eine Farbzahl DE von 3,59, eine Farbzahl DB von 2,57 und ein Oligomergehalt von 106 ppm. Damit liegen die Farbzahlen DE und DB sowie der Oligomergehalt über der geforderten Spezifikation.

### Vergleichsbeispiel 10

Die Extraktion wird entsprechend der im Vergleichsbeispiel 1 durchgeführten Extraktion durchgeführt. Im Unterschied zu Vergleichsbeispiel 1 wird dem als Extraktionsmittel eingesetzten Wasser eine Standardpuffersubstanz für den pH-Wert 6 zugemischt. Die Extraktionszeit betrug 2 Stunden.

Nach 2 Stunden Extraktionszeit ergab sich ein Formaldehydgehalt von 5 ppm, eine Farbzahl DE von 3,29, eine Farbzahl DB von 2,63, Gehalte an Trioxan, Tetroxan und Oligomeren konnten nicht nachgewiesen werden.

### Vergleichsbeispiel 11

Die Versuchsdurchführung entspricht der in Vergleichsbeispiel 10, jedoch wurde die Extraktionszeit auf 6 Stunden erhöht.

Nach einer Extraktionszeit von 6 Stunden ergab sich ein Polyoxymethylen-Granulat mit einem Formaldehydanteil von 5 ppm, eine Farbzahl DE von 6,39, eine Farbzahl DB von 4,16 und ein Trioxangehalt von 186 ppm. Der Anteil an Tetroxan und Oligomeren lag unterhalb der Nachweisgrenze.

Wie im Vergleichsbeispiel 10 lagen unmittelbar nach Durchführung der Extraktion die Farbzahlen DE und DB oberhalb der geforderten Spezifikationswerte. Zusätzlich war bei der in Vergleichsbeispiel 11 durchgeführten Extraktion der Anteil an Trioxan zu hoch.

### Beispiel 1

Die Extraktion wurde wie im Vergleichsbeispiel 1 beschrieben durchgeführt. Die Extraktionszeit betrug 3 Stunden und im Unterschied zu der im Vergleichsbeispiel 1 beschriebenen Extraktion wurde als Extraktionsmittel Wasser eingesetzt, dem 10 % einer Puffersubstanz zugegeben waren. Die eingesetzte Puffersubstanz wurde durch Mischen von 175 kg Wasser mit 2,5 Litern einer 2,5 %-igen Natriumtetraboratlösung und 300 ml einer 50 %-igen Glycerophosphatlösung hergestellt.

Nach einer Extraktionszeit von 3 Stunden ergab sich ein Formaldehydanteil von 6 ppm, eine Farbzahl DE von 1,98, eine Farbzahl DB von 1,94 und ein Oligomeranteil von 61 ppm.

### Beispiel 2

Die Extraktion wurde wie in Beispiel 1 durchgeführt, jedoch wurde die Extraktionszeit von 3 Stunden auf 6 Stunden erhöht.

Nach einer Extraktionszeit von 6 Stunden ergab sich ein Formaldehydgehalt im Granulat von 6 ppm, eine Farbzahl DE von 2,33, eine Farbzahl DB von 2,32 und einen Oligomeranteil von 78 ppm

Mit der in den Beispielen 1 und 2 eingesetzten Puffersubstanz ergab sich somit ein Polyoxymethylen-Granulat, das die geforderten Spezifikationswerte bezüglich des Formaldehydgehalts von weniger als 8 ppm, der Farbzahlen DE und DB von weniger als 2,5 und dem nicht nachweisbaren Anteil an Trioxan, Tetroxan und Oligomeren von weniger als 100 ppm erfüllt.

### Bezugszeichenliste

- 1: POM-Zufuhrleitung
- 3: Vorlagebehälter
- 5: Förderleitung
- 7: Abscheider
- 9: Rücklaufleitung
- 11: Granulatleitung
- 13: Extraktionskolonne
- 15: Heizschlange
- 17: Extraktionsmittelleitung
- 19: Dosierleitung
- 21: Ablaufleitung
- 23: Produktleitung
- 25: Granulatzentrifuge
- 27: Rücklaufleitung
- 29: Produktleitung

## Patentansprüche

1. Verfahren zur Aufarbeitung von partikelförmigem Rohpolyoxymethylen, folgende Schritte umfassend:
(a) Zugabe des partikelförmigen Rohpolyoxymehtylens in eine Extraktionskolonne (13), wobei die Extraktionskolonne (13) mit einem Druck im Bereich von 1 bis 6 bar betrieben wird,
(b) Zugabe eines polaren Extraktionsmittels in die Extraktionskolonne (13) mit einer Temperatur im Bereich von 95 bis 140°C und einem Druck im Bereich von 1 bis 6 bar,
**dadurch gekennzeichnet, dass** in die Extraktionskolonne (13) 10 bis 1000 ppm, bezogen auf die zugeführte Menge an polarem Extraktionsmittel, einer Puffersubstanz, die im pH-Bereich von 7,5 bis 11,5 puffert, zugegeben werden und dass die Puffersubstanz ausgewählt ist aus Natriumtetraborat, Natriumglycerophosphat oder Mischungen daraus.

2. Verfahren gemäß Anspruch 1, **dadurch gekennzeichnet, dass** die Puffersubstanz dem polaren Extraktionsmittel vor Zugabe in die Extraktionskolonne (13) zugemischt wird.

3. Verfahren gemäß Anspruch 1, **dadurch gekennzeichnet, dass** die Puffersubstanz und das polare Extraktionsmittel über getrennte Zuläufe der Extraktionskolonne (13) zugeführt werden.

4. Verfahren gemäß Anspruch 2, **dadurch gekennzeichnet, dass** die Puffersubstanz über eine Dosierleitung (19) in die Zufuhrleitung (17) für das polare Extraktionsmittel eindosiert wird.

5. Verfahren gemäß Anspruch 2, **dadurch gekennzeichnet, dass** das polare Extraktionsmittel und die Puffersubstanz in einem Vorlagebehälter gemischt werden.

6. Verfahren gemäß einem der Ansprüche 1 bis 5, **dadurch gekennzeichnet, dass** das polare Extraktionsmittel und das partikelförmige Rohpolyoxymethylen der Extraktionskolonne (13) im Gegenstrom zugeführt werden.

7. Verfahren gemäß einem der Ansprüche 1 bis 6, **dadurch gekennzeichnet, dass** das polare Extraktionsmittel Wasser ist.

8. Verfahren gemäß einem der Ansprüche 1 bis 7, **dadurch gekennzeichnet, dass** partikelförmiges Polyoxymethylen über eine Schleuse aus der Extraktionskolonne entnommen wird.

9. Verfahren gemäß Anspruch 8, **dadurch gekennzeichnet, dass** das partikelförmige Polyoxymethylen in einer Granulatzentrifuge (25) vom polaren Extraktionsmittel getrennt wird.

10. Verfahren gemäß Anspruch 9, **dadurch gekennzeichnet, dass** der Granulatzentrifuge (25) mindestens ein Trockner nachgeschaltet ist, um das partikelförmige Polyoxymethylen zu trocknen.

## Claims

1. A process for working up particulate crude polyoxymethylene, which comprises the following steps:
(a) introduction of the particulate crude polyoxymethylene into an extraction column (13) operated at a pressure in the range from 1 to 6 bar,
(b) introduction of a polar extractant into the extraction column (13) with a temperature in the range from 95 to 140°C and a pressure in the range from 1 to 6 bar,
wherein from 10 to 1000 ppm, based on the amount of polar extractant introduced, of a buffer substance which buffers in the pH range from 7.5 to 11.5 are introduced into the extraction column (13) and the buffer substance is selected from among sodium tetraborate, sodium glycerophosphate and mixtures thereof.

2. The process according to claim 1, wherein the buffer substance is mixed with the polar extractant before introduction into the extraction column (13).

3. The process according to claim 1, wherein the buffer substance and the polar extractant are introduced via separate inlets into the extraction column (13).

4. The process according to claim 2, wherein the buffer substance is fed in via a metering line (19) into the feed line (17) for the polar extractant.

5. The process according to claim 2, wherein the polar extractant and the buffer substance are mixed in a reservoir.

6. The process according to any of claims 1 to 5, wherein the polar extractant and the particulate crude polyoxymethylene are fed in countercurrent into the extraction column (13).

7. The process according to any of claims 1 to 6, wherein the polar extractant is water.

8. The process according to any of claims 1 to 7, wherein particulate polyoxymethylene is taken off via a lock from the extraction column.

9. The process according to claim 8, wherein the particulate polyoxymethylene is separated from the polar extractant in a pelletized material centrifuge (25).

10. The process according to claim 9, wherein the pelletized material centrifuge (25) is followed by at least one dryer in order to dry the particulate polyoxymethylene.

## Revendications

1. Procédé de traitement de polyoxyméthylène brut particulaire, comprenant les étapes suivantes :
(a) l'ajout du polyoxyméthylène brut particulaire dans une colonne d'extraction (13), la colonne d'extraction (13) étant exploitée à une pression dans la plage allant de 1 à 6 bar,
(b) l'ajout d'un agent d'extraction polaire dans la colonne d'extraction (13) à une température dans la plage allant de 95 à 140 °C et à une pression dans la plage allant de 1 à 6 bar,
**caractérisé en ce que** 10 à 1 000 ppm, par rapport à la quantité introduite d'agent d'extraction polaire, d'une substance tampon, qui tamponne dans la plage de pH allant de 7,5 à 11,5, sont ajoutés dans la colonne d'extraction (13), et **en ce que** la substance tampon est choisie parmi le tétraborate de sodium, le glycérophosphate de sodium ou leurs mélanges.

2. Procédé selon la revendication 1, **caractérisé en ce que** la substance tampon est incorporée dans l'agent d'extraction polaire avant l'ajout dans la colonne d'extraction (13).

3. Procédé selon la revendication 1, **caractérisé en ce que** la substance tampon et l'agent d'extraction polaire sont introduits par des alimentations séparées dans la colonne d'extraction (13).

4. Procédé selon la revendication 2, **caractérisé en ce que** la substance tampon est introduite par une conduite de dosage (19) dans la conduite d'alimentation (17) pour l'agent d'extraction polaire.

5. Procédé selon la revendication 2, **caractérisé en ce que** l'agent d'extraction polaire et la substance tampon sont mélangés dans un contenant de stockage.

6. Procédé selon l'une quelconque des revendications 1 à 5, **caractérisé en ce que** l'agent d'extraction polaire et le polyoxyméthylène brut particulaire sont introduits à contre-courant dans la colonne d'extraction (13).

7. Procédé selon l'une quelconque des revendications 1 à 6, **caractérisé en ce que** l'agent d'extraction polaire est l'eau.

8. Procédé selon l'une quelconque des revendications 1 à 7, **caractérisé en ce que** le polyoxyméthylène particulaire est déchargé de la colonne d'extraction par une vanne.

9. Procédé selon la revendication 8, **caractérisé en ce que** le polyoxyméthylène particulaire est séparé de l'agent d'extraction polaire dans une centrifugeuse de granulat (25).

10. Procédé selon la revendication 9, **caractérisé en ce qu'**au moins un séchoir est raccordé en aval de la centrifugeuse de granulat (25), afin de sécher le polyoxyméthylène particulaire.
